# EUROPÄISCHE PATENTSCHRIFT

(11) **EP 2 753 830 B1**
(45) Veröffentlichungstag und Bekanntmachung des Hinweises auf die Patenterteilung: **18.11.2015**
(21) Anmeldenummer: 12756107.4
(22) Anmeldetag: 04.09.2012
(51) Int. Cl.: F03G 7/06

(54) **AKTOR MIT WENIGSTENS EINEM THERMISCHES WANDLERMATERIAL AUFWEISENDEN STELLELEMENT**
ACTUATOR HAVING AT LEAST ONE CONTROL ELEMENT WHICH HAS THERMAL TRANSDUCER MATERIAL
ACTIONNEUR MUNI D'AU MOINS UN ÉLÉMENT DE RÉGLAGE RENFERMANT UN MATÉRIAU À TRANSFORMATION THERMIQUE

(30) Priorität: 05.09.2011 DE 102011112290
(43) Veröffentlichungstag der Anmeldung: 16.07.2014
(73) Patentinhaber: Fraunhofer-Gesellschaft zur Förderung der angewandten Forschung e.V., 80686 München (DE)
(72) Erfinder: FLASCHENTRÄGER, David, 64293 Darmstadt (DE); KOCH, Thorsten, 64342 Seeheim-Jugenheim (DE); SEIPEL, Björn, 61197 Florstadt (DE); MELZ, Tobias, 64285 Darmstadt (DE)
(74) Vertreter: Rösler, Uwe
(86) Internationale Anmeldenummer: PCT/EP2012/003696
(87) Internationale Veröffentlichungsnummer: WO 2013/034280

(56) Entgegenhaltungen:
- US-A- 5 588 295
- US-A- 5 608 692
- US-A- 5 977 685
- US-B1- 6 545 391

## Beschreibung

### Technisches Gebiet

Die Erfindung bezieht sich auf einen Aktor mit wenigstens einem, thermisch aktivierbares Wandlermaterial aufweisenden Stellelement, das durch thermische Energiezu- oder -abführung aus einem ersten in einen zweiten Formzustand übergeht, sowie mit einem mechanischen Energiespeicher, der mit dem Stellelement in Wirkverbindung steht und auf das Stellelement im Zustand des zweiten Formzustandes eine das Stellelement in den ersten Formzustand rückführende Rückstellkraft generiert.

### Stand der Technik

Aktoren mit wenigstens einem, thermisch aktivierbares Wandlermaterial aufweisenden Stellelement dienen der Verrichtung mechanisch aktorischer Arbeit, bei der es gilt, das Stellelement längs einer Bewegungstrajektorie, die in den meisten Fällen längs einer Linearachse entspricht, bidirektional gesteuert auszulenken. Für eine Vielzahl von technischen, insbesondere stelltechnischen Anwendungen, werden Stellelemente eingesetzt, die aus einer Formgedächtnislegierung, häufig in Form von Formgedächtnisdrähten bzw. -blechen bestehen.

Die Aktivierung derartiger Stellelemente erfolgt in aller Regel entweder über die Umgebungstemperatur oder durch künstliche thermoelektrische Stimulation. Im Falle einer künstlichen thermoelektrischen Stimulation wird an das, aus einer elektrisch leitfähigen Formgedächtnislegierung, im weiteren FGL abgekürzt, bestehende Stellelement eine elektrische Spannung angelegt, die längs des Stellelementes zu einem elektrischen Stromfluss sowie einer Widerstandsbedingten ohmschen Wärme führt, die das Stellelement erwärmt.

Erwärmungsbedingt erfahren von aus FGL zusammengesetzten Stellelemente in aller Regel eine Formänderung, vorzugsweise in Form einer Verkürzung bzw. Formgrößenreduzierung, die durch eine Phasenumwandlung zwischen der martensitischen Niedrigtemperaturphase zur austenitischen Hochtemperaturphase bedingt ist. Viele der bekannten Formgedächtnislegierungen vermögen nach Erreichen der austenitischen Hochtemperaturphase keine weitere Arbeit mehr zu leisten; in eben diesen Fällen wird von einem Einwegeffekt gesprochen, der durch eine einmalige Formänderung beim Aufheizen der Formgedächtnislegierung keine selbständige Rückverformung, selbst bei Temperaturreduzierung aufweist.

Um in diesen Fällen erneut Arbeit verrichten zu können, gilt es das Stellelement wieder in den Ausgangszustand zurückzuführen, d. h. das aus einer FGL bestehende Stellelement gilt es einerseits abzukühlen, andererseits durch eine externe mechanische Kraft in den Ausgangszustand zurückzuformen. Nur der guten Ordnung halber sei an dieser Stelle darauf verwiesen, dass eine derartige durch eine mechanische externe Kraft bedingte Formrückführung auch für Formgedächtnisaktoren eingesetzt wird, die durch magnetische Felder entsprechend aktivierbar sind.

Die mechanische Rückführung von einmalig ausgelenkten bzw. durch thermische Aktivierung einmal verformte FGL Stellelemente, bspw. in Form von Drähten oder Drahtbündeln, erfolgt mit Hilfe von mit den Stellelementen in Wirkverbindung stehenden Rückstellelementen, bspw. in Form von Federn oder Massen. So leistete während des Schaltvorganges das Stellelement mechanische Arbeit, bedingt durch eine Stellwegänderung, die teilweise dazu genutzt wird, das entsprechende Rückstellelement zu verformen, bspw. eine Feder zu spannen, oder eine Masse zu verschieben, bspw. eine Masse entgegen der Gravitation anzuheben. Beim Rückstellen wird die so gespeicherte mechanische Energie wieder auf das Stellelement übertragen, wodurch dieses in seine Ausgangszustand überführt werden kann.

Eine weitere Möglichkeit zur Rücküberführung von aus FGL-Stellelementen in den Ausgangszustand kann auch dadurch realisiert werden, indem mehrere FGL-Stellelemente in wechselseitige Wirkverbindung treten, bei denen der Schaltvorgang eines FGL-Stellelementes eine entsprechende Rückstellung eines anderen FGL-Stellelementes bewirkt. Auf diese Weise können auf Rückstellelemente in Form von Federn und Massen verzichtet werden.

Die Vorraussetzung für eine vollständige sowie auch in kurzer Zeit realisierbare Rückstellung eines durch thermische Aktivierung verformten, FGL-Stellelementes hängt maßgeblich von der Fähigkeit ab, die für den einmaligen Verformungsvorgang erforderliche thermische Energie in Form von Wärme nach dem Schaltvorgang aus diesem schnellstmöglich wegzuführen bzw. zu dissipieren.

Um den Abkühlvorgang zu unterstützen werden in an sich bekannter Weise der durch Konvektion bedingte Entwärmungsvorgang bspw. unter Zuhilfenahme eines externen Lüfters unterstützt, wodurch der konvektive Abkühlvorgang deutlich unterstützt und die Abkühlgeschwindigkeit des aus einer FGL bestehenden Stellelementes erhöht werden kann, um auf diese Weise eine schnellere Rückkehr in den Ausgangszustand und somit ein schnelleres erneutes Schalten bzw. Aktivieren des Stellelementes zu ermöglichen.

Die Druckschrift US 6,545,391 B1 beschreibt einen Aktor, der aus zwei flächig miteinander verbundenen Polymerschichten aufgebaut ist. An die erste Schicht, die aus einem elektrostriktiven Material besteht, wird über Elektroden ein elektrisches Feld angelegt, so dass diese Schicht eine Formänderung erfährt. Die Elektrostriktion beschreibt grundsätzlich die Deformation eines dielektrischen Mediums in Abhängigkeit eines angelegten elektrischen Felds. Die Deformation ist unabhängig von der Richtung des angelegten Feldes und proportional zum Quadrat des Feldes. Durch die aufgebrachte zweite Schicht, die elektrostriktiv inaktiv ist, äußert sich diese Formänderung in einer Verbiegung des gesamten Schichtaufbaus. Nach Abschalten des elektrischen Feldes wird der Schichtaufbau aufgrund der rückstellenden Kräfte in der zweiten Schicht in seine Ausgangslage zurückgeführt.

Die Druckschrift US 5 977 685 offenbart einen Aktor, der aus einem flachen Polymermaterial besteht, auf dem beidseitig zwei flächige Elektroden aufgebracht sind. Bei Anlegen einer elektrischen Spannung an die Elektroden schrumpft das Polymermaterial. Da die Elektroden über unterschiedliche mechanische Eigenschaften verfügen, z.B. unterschiedlich dick sind, bewirkt die Schrumpfung des Polymers ein Verbiegen der gesamten Schichtanordnung. Die Rückstellung in die Ausgangslage kann durch die mechanischen Eigenschaften der Elektroden erfolgen, aber auch durch eine zusätzliche flächig aufgebrachte Elastomerschicht an der Außenseite einer Elektrode unterstützt werden.

### Darstellung der Erfindung

Der Erfindung liegt die Aufgabe zugrunde einen Aktor mit wenigstens einem, thermisch aktivierbares Wandlermaterial aufweisenden Stellelement, das durch thermische Energiezu- oder -abführung aus einem ersten in einen zweiten Formzustand übergeht, sowie mit einem mechanischen Energiespeicher, der mit dem Stellelement in Wirkverbindung steht und auf das Stellelement im Zustand des zweiten Formzustandes eine das Stellelement in den ersten Formzustand rückführende Rückstellkraft generiert, derart weiterzubilden, dass der Vorgang der Rückführung in den jeweils ersten Formzustand schneller als bisher erfolgt, so dass der Aktor über schnellere aktorische Reaktionszeiten verfügt, d. h. dass das Stellelement in zeitlicher sehr kurzer Abfolge zwischen dem ersten und zweiten Formzustand hin und her wechseln kann.

Die Lösung der der Erfindung zugrunde liegenden Aufgabe ist im Anspruch 1 angegeben. Den Erfindungsgedanken in vorteilhafter Weise weiterbildende Merkmale sind Gegenstand der Unteransprüche sowie der weiteren Beschreibung insbesondere unter Bezugnahme auf die Ausführungsbeispiele zu entnehmen. Lösungsgemäß ist ein Aktor mit den Merkmalen des Oberbegriffes des Anspruches 1 derart ausgebildet, dass der mechanische Energiespeicher einen Elastomerkörper aufweist, der wenigstens bereichsweise in direkten körperlichen und thermischen Kontakt mit dem Stellelement steht. Der Elastomerkörper ist zudem an wenigsten zwei räumlich getrennten Fügebereichen längs des Stellelementes mit diesem raumfest verbunden, so dass bei Formänderung des Stellelementes der Elastomerkörper einer die Rückstellkraft generierenden Kompression oder Elongation bzw. Expansion unterliegt.

Im Weiteren sei davon ausgegangen, dass das Stellelement vollständig aus einem thermisch aktivierbaren Wandlermaterial besteht, so vorzugsweise aus einer thermisch aktivierbaren Formgedächtnislegierung (FGL). Selbstverständlich sind auch Stellelemente denkbar, die aus unterschiedlich aktivierbaren Wandlermaterialien bestehen. In diesen Fällen lassen sich die weiteren Ausführungen zum Erfindungsgedankten auf eben diese thermisch aktivierbaren Bereiche von aus hybrid zusammengesetzten Stellelementen beziehen.

Stellelemente, die aus thermisch aktivierbaren Formgedächtnismetalllegierungen bestehen, vermögen über die unterschiedlichsten Raumformen zu verfügen; am weitesten verbreitet sind draht- oder blechförmig geformte FGL-Stellelemente in aktorischen Systemen. Unabhängig von Form- und Größenwahl des jeweils thermisch aktivierbaren Stellelementes gilt es lösungsgemäß das Stellelement mit einem Elastomerkörper derart zu verbinden, so dass der Elastomerkörper gleichzeitig mit der Formänderung bzw. Stellwegänderung des Stellelementes ebenso eine Formänderung erfährt, durch die am Elastomerkörper Kompressions- oder Expansionsarbeit verrichtet wird, die in Form von Spannenergie im Elastomerkörper gespeichert wird. Die im Elastomerkörper gespeicherte Spannenergie wiederum erzeugt eine entgegen der Stellwegänderung gerichtete Rückstellkraft auf das Stellelement, die das Stellelement wieder in den Ausgangszustand zu überführen vermag.

Um die durch die Stellwegänderung des FGL-Stellelementes initiierte Formänderung des Elastomerkörpers möglichst direkt und weitgehend ohne Stellwegverluste nutzen zu können, bedient man sich wenigstens zweier Befestigungsmittel, die zum einen mit dem Stellelement an jeweils zwei voneinander längs des Stellelementes beabstandeten Bereichen und die überdies fest mit den formschlüssig an das Stellelement gefügten Elastomerkörper verbunden sind.

Auf diese Weise vermögen die Befestigungsmittel bei entsprechender Formänderung des Stellelementes Kompressions- bzw. Expansionskräfte auf den zwischen beiden Befestigungsmitteln befindlichen Elastomerkörper zu übertragen. Konkrete Ausgestaltungsformen zur Realisierung der Befestigungsmittel werden in Verbindung mit den nachfolgenden Figuren erläutert.

Der formschlüssig mit den Stellelementen gefügte Elastomerkörper verfügt aufgrund seiner mechanischen Eigenschaften über eine ausreichende Elastizität, so dass der Elastomerkörper den thermisch aktivierten Verformungen des Stellelementes dauerhaft und schadlos zu folgen vermag. Durch den direkten körperlichen Kontakt zwischen dem Elastomerkörper und dem Stellelement kann die durch den elektrischen Betrieb des aus einer Formgedächtnislegierung bestehenden Stellelementes entstehende Wärme unmittelbar aufgenommen und an die Umgebung abgeführt werden. Da der Elastomerkörper das Stellelement zumindest bereichsweise mantelartig, vorzugsweise vollständig umgibt, vermag der Elastomerkörper das Stellelement wirksam zu entwärmen. In gleicher Weise wird das FGL-Stellelement bei Umgebungstemperatur initiierter Aktivierung über den das Stellelement umhüllenden Elastomerkörper entwärmt, sobald die Umgebungstemperatur unter die Aktivierungstemperatur abfällt.

In einer bevorzugten Ausführungsform ist der Elastomerkörper zu Zwecken einer verbesserten Wärmeableitung mit zusätzlichen, die thermische Wärmeableitung verbessernden Stoffen bzw. Partikeln versetzt, wie bspw. Bornitrid. Selbstverständlich eignen sich auch Zusätze wie Metallpulver, so bspw. Eisen-, Kupfer-, Aluminium- oder Silberpulver. Ebenso eignen sich Zugaben von Oxiden, wie bspw. Zinkoxid oder Magnesiumoxid. Auch können innerhalb des Elastomerkörper faserartige Füllstoffe in Form von Kohlefasern zu Zwecken einer verbesserten Wärmeleitfähigkeit eingearbeitet sein. Ebenso kann der Elastomerkörper mit Graphit versetzt sein. Die vorstehenden Stoffzugaben, insbesondere die Zugabe von elektrisch leitenden Stoffen, gilt es in einer Konzentration und Verteilung in den Elastomerkörper einzubringen, durch die der Elastomerkörper selbst nicht elektrisch leitfähig wird, um auf diese Weise eine elektrische Isolation des Elastomerkörpers gegenüber der Umgebung zu gewährleisten.

Um den Entwärmungsvorgang weiter zu unterstützen ist es vorteilhaft sowie auch denkbar in Kombination oder alternativ zu den vorstehenden Maßnahmen den Elastomerkörper mit wenigstens einem Kühlkanal zu versehen, durch den ein Kühlmedium, wie bspw. eine Kühlflüssigkeit, hindurchgeleitet werden kann.

Auch ist es vorteilhaft, die Oberfläche des Elastomerkörpers, die dem Stellelement abgewandt und der Umgebung zugewandt ist, derart zu gestalten, dass sie über die Körperoberfläche vergrößernde Oberflächenstrukturen verfügt, die dazu ausgebildet und geeignet sind, einen Wärmeaustausch über die Oberflächenstrukturen zu verbessern. Derartige Oberflächenstrukturen können in Form von Kühlrippen, wie sie aus dem Bereich von Verbrennungsmotoren bekannt sind, gewählt sein.

Wie einige der weiteren Ausführungsbeispiele zeigen werden, dient der Elastomerkörper zudem auch als Verformungskörper, durch den die Trajektorie, längs der die Stellwegänderung des Aktors erfolgt, vorgegeben wird. Insbesondere beim Einsatz von zwei oder mehreren, den jeweiligen Elastomerkörper durchdringenden, aus FGL bestehenden Stellelementen können unterschiedlich räumliche Auslenkungen des Aktors aufgrund der elastischen Eigenschaften des Elastomerkörpers erzwungen bzw. realisiert werden.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Querschnitt eines lösungsgemäß ausgebildeten Aktors;
- Fig. 2a, b: Befestigungsmittel zur Fixierung von Deckelelementen längs des FGL-Stellelementes;
- Fig. 3 bis 6: alternative Ausgestaltungsmöglichkeiten des lösungsgemäß ausgebildeten Aktors.

### Wege zur Ausführung der Erfindung, gewerbliche Verwendbarkeit

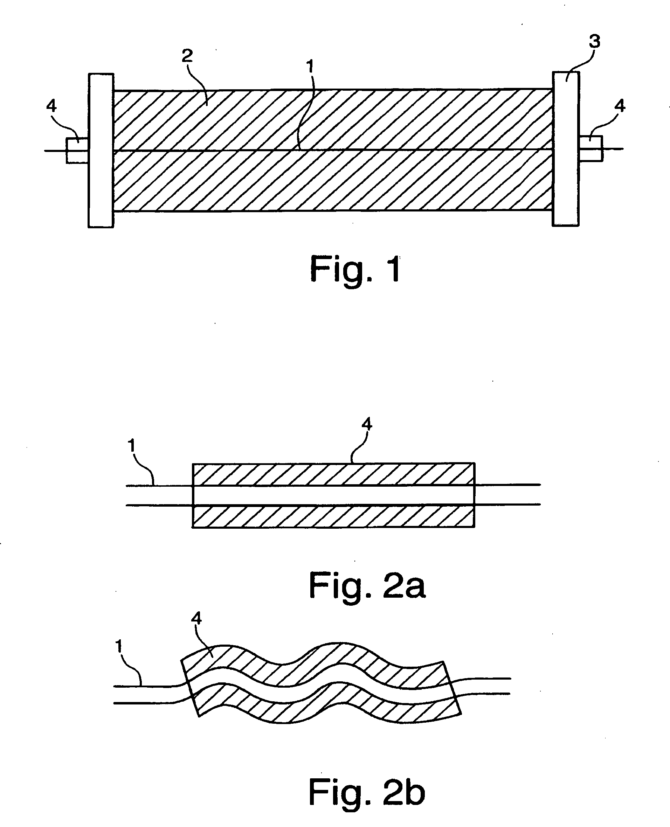

Figur 1 zeigt einen schematisierten Längsschnitt durch einen lösungsgemäß ausgebildeten Aktor, der zur Erzeugung einer Stellwegänderung einen aus einer Formgedächtnislegierung bestehenden Draht 1 verfügt. Zur thermischen Aktivierung des FGL-Drahtes 1 (FGL: Formgedächtnislegierung) wird dieser mit einer geeigneten Stromquelle (nicht dargestellt) verbunden. Alternativ kann der FGL-Draht auch durch Überschreiten der Umgebungstemperatur über eine bestimmte Aktivierungstemperatur zur Formänderung veranlasst werden.

Längs eines Abschnittes des FGL-Drahtes 1 ist ein Elastomerkörper 2 in Form eines Vollzylinders vorgesehen, durch den der FGL-Draht 1 mittig durchläuft. Der FGL-Draht 1 tritt somit in unmittelbar körperlichen Kontakt mit dem Elastomerkörper 2, der diesen formschlüssig umgibt. Zu beiden Seiten des Elastomerkörpers 2 sind Befestigungsmittel 3 in Form von Deckelelementen vorgesehen, die mit dem FGL-Draht 1 sowie auch mit den Stirnseiten des Elastomerkörpers 2 fest gefügt sind. Zur festen Fügung der Deckelelemente 3 mit dem FGL-Draht sei auf die Verbindungselemente 4 verwiesen, die in den Figuren 2a, b illustriert sind.

Im Falle einer Aktoraktivierung, die durch eine kurzzeitige Bestromung des FGL-Drahtes 1 oder durch Erwärmung des FGL-Drahtes 1 durch die Umgebungstemperatur erfolgt, zieht sich der FGL-Draht 1 zusammen. Durch die ortsfeste Verbindung der Deckelelemente 3 mit dem Draht 1 werden die Deckelelemente 3 entsprechend mit der Drahtverformung mitbewegt und komprimieren ihrerseits den zwischen beiden Deckelelementen 3 beidseitig begrenzten Elastomerkörper 2, der sich entsprechend elastisch verformt, d.h. komprimiert wird.

Sinkt hingegen die Temperatur innerhalb des FGL-Drahtes nach entsprechender Aktivierung bzw. Abkühlung der Umgebungstemperatur wieder ab, so kommt es innerhalb des FGL-Drahtes 1 zu einer Gefügeänderung, durch die die Steifigkeit des FGL-Drahtes 1 absinkt. Der komprimierte Elastomerkörper 2 kann somit seine gespeicherte mechanische Spann- bzw. Kompressionsenergie durch entspannen in Form einer den FGL-Draht 1 in den Ausgangszustand überführenden Rückstellkraft abgeben, die auf beide Deckelelemente 3 mit jeweils entgegengesetzten Kraftrichtungen einwirkt.

In Figur 2a und b ist eine Möglichkeit dargestellt, mit der die in Figur 1 illustrierten Deckelelemente 3 jeweils ortsfest mit dem FGL-Draht 1 gefügt werden können. Hierzu dienen sog. plastisch verformbare, hülsenartig ausgebildete Verbindungselemente 4, die über den FGL-Draht 1 an eine beliebige Stelle längs des Drahtes geführt und positioniert werden können. In Figur 2a ist ein derartiges hülsenförmig ausgebildetes Verbindungselement 4 dargestellt. Um eine feste, längs des FGL-Drahtes 1 unverrückbare Fixierung vorzunehmen, wird das Verbindungselement 4 mit Hilfe eines geeigneten Crimp-Werkzeuges in Längserstreckung des FGL-Drahtes 1 plastisch verformt, so dass das Verbindungselement 4 mit dem FGL-Draht 1 sicher durch eine Kombination von Form- und Reibschlusskraft gefügt wird.

Das in den Figuren 2a und b illustrierte plastisch verformbare Verbindungselement 4 wird jeweils einseitig relativ zum Deckelelement 3 gemäß der in Figur 1 entnehmbaren Position mit dem FGL-Draht 1 fest verbunden. Bei einer entsprechenden Verkürzung des FGL-Drahtes 1 wandern somit beide Deckelelemente 3 aufgrund der jeweils einseitig festen Verbindung mit dem FGL-Draht 1 aufeinander zu und komprimieren somit den dazwischen befindlichen Elastomerkörper 2.

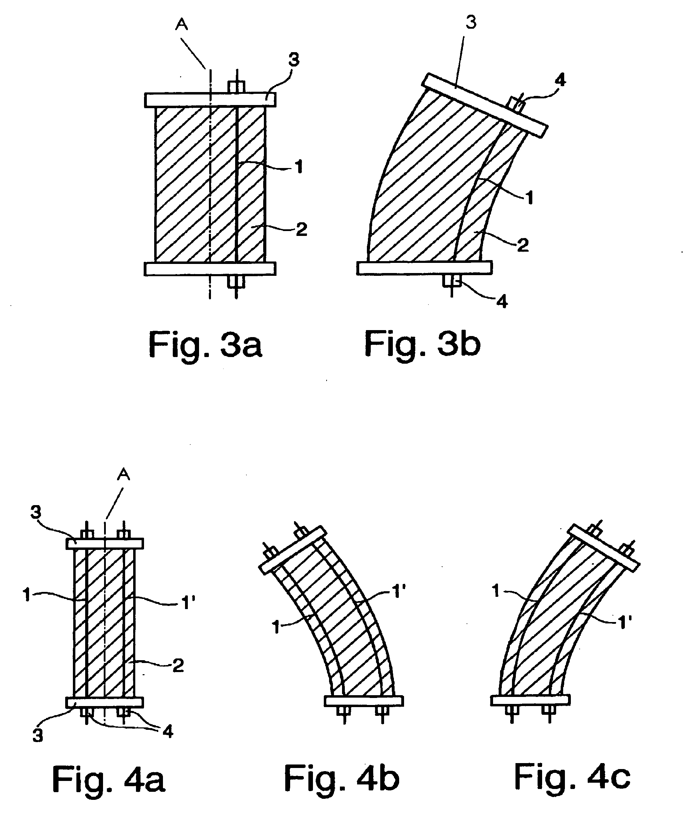

Im Unterschied zu der in Figur 1 mittigen bzw. zentrischen Anordnung des FGL-Drahtes 1 längs des zylinderförmig ausgebildeten Elastomerkörpers 2, wodurch die Stellwegänderung des Aktors in Längserstreckung des FGL-Drahtes 1 verläuft, ist der FGL-Draht 1 im Ausführungsbeispiel gemäß der Figuren 3a und b außermittig zur Zylinderachse A des zylinderförmigen Elastomerkörpers 2 angeordnet. Auch in diesem Beispiel ist der Elastomerkörper 2 über die Deckelelemente 3 sowie den Verbindungselementen 4 fest mit dem FGL-Draht 1 verbunden.

Im Falle einer thermisch bedingten Aktivierung des FGL-Drahtes 1, die zu einer Verkürzung des Drahtes 1 führt, kommt es im Falle des Aktors gemäß Figur 3 zu einer seitlichen Schwenkbewegung, die der Aktor ausführt, bedingt durch die Geometrie und elastischen Verformungseigenschaften des Elastomerkörpers 2. Die Bewegungstrajektorie, der der Aktor in dem in Figur 3 illustrierten Fall folgt, ergibt sich somit aus der exzentrischen Anbringung des FGL-Drahtes 1 relativ zur Symmetrieachse A des Elastomerkörpers 2 sowie durch die Form, Größe und den elastischen Verformungseigenschaften des Elektrodenkörpers 2.

Zur Rückführung des thermisch aktivierten FGL-Drahtes 1 in den Ausgangszustand dient wiederum der Elastomerkörper 2, der aufgrund der Verformung eine den Ausgangszustand rückführende Rückstellkraft erzeugt.

Bei der Verwendung lediglich eines FGL-Drahtes 1 zur Stellwegänderung des Aktors, ist die Stellwegtrajektorie durch die Aktorausgestaltung unveränderlich vorgegeben. Sieht man hingegen zwei oder mehrere, jeweils separat voneinander thermisch aktivierbare FGL-Drähte innerhalb eines einzigen Aktors vor, so können individuelle Stellwegtrajektorien erzeugt werden. In Figur 4a ist ein diesbezüglicher Aktor illustriert, der längs eines Elastomerkörpers 2 zwei getrennte FGL-Drähte 1,1' vorsieht. Die FGL-Drähte 1,1' sind in der gleichen Weise über Verbindungselemente 4 und Deckelelemente 3 mit dem Elastomerkörper 2 verbunden, wie dies im Fallbeispiel gemäß Figur 1 erläutert ist. Beide FGL-Drähte 1,1' sind jeweils azentrisch zur Zylinderachse A des Elastomerkörpers 2 angebracht. Je nach Aktivierung der FGL-Drähte 1,1' kann eine bidirektionale Verschwenkung des Aktors realisiert werden. Im Fallbeispiel 4b sei angenommen, dass der FGL-Draht 1 thermisch aktiviert und damit verkürzt ist, wohingegen der FGL-Draht 1' keine entsprechende Aktivierung erfährt. Auf diese Weise schwenkt der Aktor zur linken Seite. Demgegenüber wird im Fallbeispiel 4c der FGL-Draht 1' thermisch aktiviert, wohingegen der FGL-Draht 1 ohne Aktivierung bleibt. Hierdurch wird der Aktor nach rechts geschwenkt. Selbstverständlich ist es möglich mehr als zwei derartige FGL-Drähte innerhalb eine Elastomerkörpers vorzusehen, um eine multidirektionale Verschwenkung des Aktors zu realisieren.

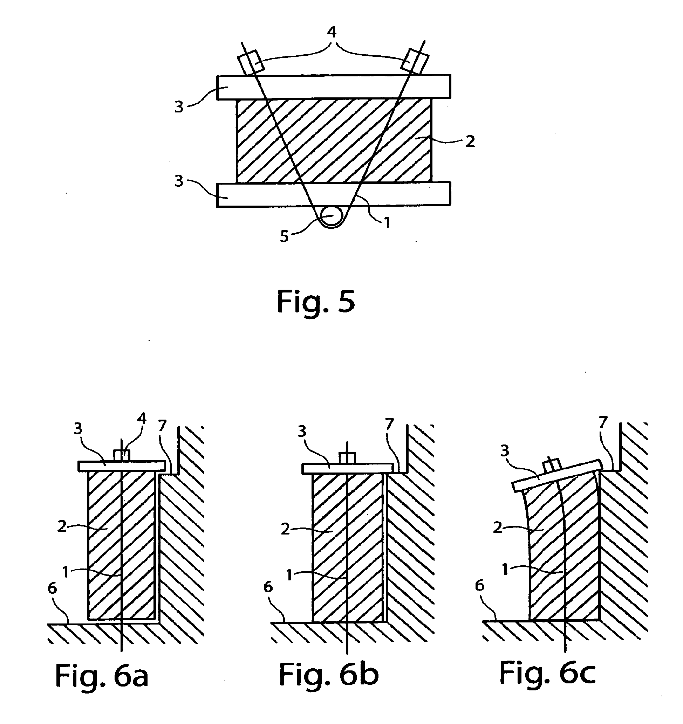

Ein weiteres Ausführungsbeispiel ist in Figur 5 illustriert, das einen FGL-Draht 1 besitzt, der jeweils in unterschiedlichen Raumrichtungen den Elastomerkörper 2 durchdringt. Hierbei ist der FGL-Draht 1 jeweils einseitig an einem Deckelelement oberen 3 mit Hilfe der vorstehend erläuterten Verbindungselemente 4 fixiert. An dem unteren Deckelelement 3 ist lediglich ein Umlenkelement 5 angebracht, um das der FGL-Draht 1 umgelenkt ist. Mit Hilfe einer derartigen Bauweise des Aktors ist es möglich, je nach Lage des Umlenkelementes 5 relativ zu den an dem Deckelelement 3 angebrachten Verbindungselementen 4 Stellwegvergrößerungen zu realisieren.

Eine weitere Variante zur Beeinflussung des Stellweges ist in den Sequenzbilddarstellungen gemäß der Figuren 6a, b und c dargestellt. Hier ist das untere Ende des Elastomerkörpers 2 mit einer unteren Abstützfläche 6 verbunden, in der zugleich der FGL-Draht 1 einseitig fixiert ist. Gleichsam wie im Ausführungsbeispiel gemäß Figur 1 verläuft der FGL-Draht 1 mittig zu dem ansonsten zylinderförmig ausgebildeten Elastomerkörpers 2. Selbstverständlich sind auch von der Zylinderform abweichende Raumformen zur Realisierung des Elastomerkörpers 2 möglich, wie bspw. im Querschnitt ovale oder n-eckige Formen.

Das obere Ende des Elastomerkörpers 2 ist mit einem Deckelelement 3 und einem bereits erläuterten Verbindungselement 4 verbunden. Bei entsprechender Aktivierung des FGL-Drahtes 1 verkürzt sich der FGL-Draht und tritt mit dem Deckelelement 3 mit einem seitlichen Gegenlager 7 in Berührung, durch das der Aktor zumindest im oberen Bereich seitlich abgeknickt wird (siehe Fig. 6b, c). Durch derartige mechanische Gegenlager 7 können von außen aufgezwungene Steifigkeitssprünge, die den Bewegungsvorgang des Aktor beeinflussen, realisiert werden, die komplexe Stellvorgänge ermöglichen, bei denen mehrere Teilbewegungen von dem selben FGL-Draht 1 während eines Schaltvorganges parallel oder sequentiell durchlaufen werden können.

Gleichsam der Anbringung bzw. dem Vorsehen eines von außen aufgezwungenen Steifigkeitssprunges durch die Realisierung des in Figur 6 illustrierten Gegenlagers 7, können derartige Steifigkeitssprünge auch innerhalb des Elastomerkörpers 2 vorgesehen werden, indem innerhalb des Elastomerkörpers geeignete miteinander in Kontakt tretende Steifigkeitsbereiche geschaffen werde.

Das Material, aus dem der Elastomerkörper 2 besteht ist grundsätzlich aus einem elektrisch nicht leitfähigen Material gewählt, so dass elektrische Kurzschlüsse, insbesondere bei elektrisch aktivierbaren Aktoren, vermieden werden können.

Typischerweise sind Elastomerkörper im Rahmen eines Gießprozesses herstellbar, während dem bereits der wenigstens eine FGL-Draht in den Bereich des Elastomerkörpers eingefügt werden kann. Alternativ kann ein Platzhalter für eine angemessene Aussparung während des Gießprozesses vorgesehen werden, so dass der FGL-Draht nach Fertigung des Elastomerkörpers in diesen eingeführt werden kann. Ebenfalls ist es möglich den wenigstens einen FGL-Draht durch nachträgliche Bohr- oder Durchdringungsvorgänge in den Elastomerkörper zu integrieren.

Besonders geeignete Materialien für den Elastomerkörper stellen elastomerartige Werkstoffe, auf Kautschuk- oder Silikonbasis dar. Auch können geschäumte Elemente mit geeigneten elastischen Eigenschaften Verwendung finden.

Wie bereits in Verbindung mit dem in Figur 6 illustrierten Ausführungsbeispiel erwähnt, können zur Realisierung komplexer aktorischer Verformungen innerhalb des Elastomerkörpers inhomogene Steifigkeitsverteilungen vorgenommen werden, bspw. durch Einlagerung von zusätzlichen Steifigkeitselementen innerhalb des Elastomerkörpers.

Auch ist es möglich während des Herstellungsprozesses des Elastomerkörpers elektronische oder mechanische Bauteile in Form von Sensoren, RFID-Chips, magnetische Körper oder ähnliches, zu integrieren, um auf diese Weise Überwachungen beliebiger Art vorzunehmen, so bspw. Temperaturüberwachung, Identifizierung im Sinne eines Plagiatschutzes etc..

### Bezugszeichenliste

- 1: Stellelement, FGL-Draht
- 2: Elastomerkörper
- 3: Deckelelement
- 4: Verbindungselement
- 5: Umlenkelement
- 6: Stützfläche
- 7: mechanisches Gegenlager

## Patentansprüche

1. Aktor mit wenigstens einem, thermisch aktivierbares Wandlermaterial aufweisenden Stellelement (1), das durch thermische Energiezu- oder abführung aus einem ersten in einen zweiten Formzustand übergeht, sowie mit einem mechanischen Energiespeicher, der mit dem Stellelement (1) in Wirkverbindung steht und auf das Stellelement (1) im Zustand des zweiten Formzustandes eine das Stellelement (1) in den ersten Formzustand rückführende Rückstellkraft generiert, **dadurch gekennzeichnet, dass** der mechanische Energiespeicher einen Elastomerkörper (2) aufweist, der wenigstens bereichsweise in direkten körperlichen und thermischen Kontakt mit dem Stellelement (1) steht, und
dass der Elastomerkörper (2) an wenigstens zwei räumlich getrennten Fügebereichen längs des Stellelementes (1) mit diesem raumfest verbunden ist, so dass bei Formänderung des Stellelementes (1) der Elastomerkörper (2) einer die Rückstellkraft generierenden Kompression oder Elongation unterliegt.

2. Aktor nach Anspruch 1,
**dadurch gekennzeichnet, dass** der Elastomerkörper (2) zumindest zwischen den wenigstens zwei Fügebereichen das Stellelement (1) formschlüssig umgibt.

3. Aktor nach Anspruch 1 oder 2,
**dadurch gekennzeichnet, dass** der Elastomerkörper (2) aus einem Elastomermaterial besteht, der wenigstens einen die Wärmeleitfähigkeit des Elastomers erhöhnenden Zusatzstoff enthält.

4. Aktor nach Anspruch 3,
**dadurch gekennzeichnet, dass** der Zusatzstoff aus einer oder mehreren der nachfolgenden Stoffgruppen gewählt ist: Metallpulver , wie Eisen, Kupfer, Aluminium, oder Silber, Oxide, wie Zinkoxid oder Magnesiumoxid, Graphit, faserartige Füllstoffe, wie Kohlefasern, oder Bornitrid .

5. Aktor nach einem der Ansprüche 1 bis 4,
**dadurch gekennzeichnet, dass** der Elastomerkörper (2) eine dem Stellelement (1) abgewandte Körperoberfläche aufweist, die über die Körperoberfläche vergrößernde Oberflächenstrukturen verfügt, die dazu ausgebildet und geeignet sind, einen Wärmeaustausch über die Oberflächenstrukturen zu verbessern.

6. Aktor nach einem der Ansprüche 1 bis 5,
**dadurch gekennzeichnet, dass** der Elastomerkörper (2) wenigstens einen Kühlkanal besitzt, durch den Kühlmedium leitbar ist.

7. Aktor nach einem der Ansprüche 1 bis 6,
**dadurch gekennzeichnet, dass** der Elastomerkörper (2) elektrisch isolierend ist.

8. Aktor nach einem der Ansprüche 1 bis 7,
**dadurch gekennzeichnet, dass** das Stellelement (1) aus einem Formgedächtnismaterial besteht.

9. Aktor nach einem der Ansprüche 1 bis 8,
**dadurch gekennzeichnet, dass** das Stellelement (1) aus einem, aus einer Formgedächtnislegierung gefertigten Draht besteht,
dass der Elastomerkörper (2) den Draht mantelartig, formschlüssig umgibt und längs des Drahtes zwischen zwei mit dem Draht fest verbundenen Befestigungsmitteln beidseitig gefasst ist.

10. Aktor nach einem der Ansprüche 1 bis 8,
**dadurch gekennzeichnet, dass** der Elastomerkörper:(2) als ein, eine Längserstreckung aufweisender Formkörper mit einer Ober- und Unterseite, die sich in Längserstreckung gegenüberliegen, ausgebildet ist,
dass an der Ober- und Unterseite des Elastomerkörpers (2) jeweils ein Deckelelement (3) fest gefügt ist,
dass wenigstens ein aus einer Formgedächtnislegierung gefertigter Draht den Elastomerkörper (2) durchragt und jeweils mit beiden Deckelelement (3) fest gefügt ist.

11. Aktor nach Anspruch 10,
**dadurch gekennzeichnet, dass** der Formkörper in Längserstreckung eine Symmetrie- oder Mittenachse aufweist, und
dass der wenigstens eine Draht exzentrisch zur Symmetrie- oder Mittenachse oder schräg zu dieser verlaufend angebracht ist.

12. Aktor nach Anspruch 10 oder 11,
**dadurch gekennzeichnet, dass** das mit der Unterseite gefügte Deckelelement (3) als stationäres, mechanisches Gegenlager (6) ausgebildet ist, das einen sich in Längserstreckung des Elastomerkörpers (2) erstreckenden Fortsatz vorsieht, und dass das an die Oberseite des Elastomerkörpers (2) gefügte Deckelelement (3) bei Formänderung mit dem Fortsatz (7) in Berührung tritt und den Elastomerkörper (2) seitlich zur Längserstreckung auszulenken vermag.

## Claims

1. Actuator with at least one control element (1) which has thermally activatable transducer material having actuating element, and which, as a result of the supply or dissipation of thermal energy, changes from a first into a second shape state, and having a mechanical energy store, which is operatively connected to the control element (1), and which, when the control element (1) is in the second shape state, exerts a restoring force on the control element (1) that returns control element to the first shape state, **characterized in that** the mechanical energy store has an elastomer body (2) which, at least in regions, is in direct physical and thermal contact with the control element (1), and that the elastomer body (2) is connected to the control element (1) in a spatially fixed manner at at least two spatially separated joining regions along the control element, such that when the shape of the control element (1) changes, the elastomer body (2) is subjected to a compression or elongation that generates the restoring force.

2. Actuator according to claim 1, **characterized in that** the elastomer body (2) surrounds the control element (1) in positive locking manner at least between the at least two joining regions.

3. Actuator according to either of claims 1 or 2, **characterized in that** the elastomer body (2) consists of an elastomer material that contains at least one additive that increases the thermal conductivity of the elastomer.

4. Actuator according to claim 3, **characterized in that** the additive is selected from one or more of the following groups of substances: metal powder, such as iron, copper, aluminium, or silver, oxides such as zinc oxide or magnesium oxide, graphite, fibrous filler materials such as carbon fibres, or boron nitride.

5. Actuator according to any one of claims 1 to 4, **characterized in that** the elastomer body (2) has a body surface which faces away from the control element (1), which surface has surface structures that enlarge the body surface, and which are designed and constructed so as to improve thermal exchange via the surface structures.

6. Actuator according to any one of claims 1 to 5, **characterized in that** the elastomer body (2) has at least one cooling duct, through which a cooling medium can be passed.

7. Actuator according to any one of claims 1 to 6, **characterized in that** the elastomer body (2) is electrically insulating.

8. Actuator according to any one of claims 1 to 7, **characterized in that** the control element (1) consists of a shape memory material.

9. Actuator according to any one of claims 1 to 8, **characterized in that** the control element (1) consists of a wire made from a shape memory alloy, that the elastomer body (2) surrounds the wire in positive fitting manner like a sheath, and is retained on both sides along the wire between two fastening means that are connected in fixed manner to the wire.

10. Actuator according to any one of claims 1 to 8, **characterized in that** the elastomer body (2) is constructed as a shaped body with a longitudinal extension, with an upper and a lower side opposite one another in the longitudinal extension, that a cap element (3) is attached fixedly to each of the upper and the lower sides of the elastomer body (2), that at least one wire made from a shape memory alloy extends through the elastomer body (2) and is joined fixedly to each of the two cap elements (3).

11. Actuator according to claim 10, **characterized in that** the shaped body is line of symmetry or centre line in the longitudinal extension, and that the at least one wire is attached so as to extend eccentrically or at an angle to the line of symmetry or centre line.

12. Actuator according to either of claims 10 or 11, **characterized in that** the cap element (3) attached to the bottom side is designed as a stationary, mechanical thrust bearing (6) that provides a protrusion directed in the longitudinal extension of the elastomer body (2), and that the cap element (3) attached to the upper side of the elastomer body (2) comes into contact with protrusion (7) during a change in shape and is able to deflect the elastomer body (2) laterally with respect to the longitudinal extension.

## Revendications

1. Actionneur comprenant au moins un élément de réglage (1) présentant un matériau de conversion activable thermiquement qui, par apport ou dégagement d'énergie thermique, transite d'un premier vers un second état de forme, de même qu'un accumulateur mécanique d'énergie qui est en interaction avec l'élément de réglage (1) et génère sur l'élément de réglage (1), dans l'état du second état de forme, une force de rappel ramenant l'élément de réglage (1) dans le premier état de forme, **caractérisé en ce que** l'accumulateur mécanique d'énergie présente un corps en élastomère (2) qui est du moins par endroits en contact physique et thermique direct avec l'élément de réglage (1) et que le corps en élastomère (2) est relié à celui-ci au niveau d'au moins deux zones de jointure séparées dans l'espace le long de l'élément de réglage (1), de sorte que, en cas de modification de forme de l'élément de réglage (1), le corps en élastomère (2) subit une compression ou élongation générant la force de rappel.

2. Actionneur selon la revendication 1, **caractérisé en ce que** le corps en élastomère (2) entoure l'élément de réglage (1) en correspondance géométrique entre les au moins deux zones de jointure.

3. Actionneur selon la revendication 1 ou 2, **caractérisé en ce que** le corps en élastomère (2) est composé d'un matériau élastomère qui contient au moins un additif augmentant la conductivité thermique de l'élastomère.

4. Actionneur selon la revendication 3, **caractérisé en ce que** l'additif est sélectionné parmi une ou plusieurs des groupes de substances suivants : poudre métallique, comme du fer, du cuivre, de l'aluminium ou de l'argent, des oxydes, comme l'oxyde de zinc ou l'oxyde de magnésium, le graphite, les matières de charge de type fibreux, comme les fibres de carbone ou le nitrure de bore.

5. Actionneur selon une des revendications 1 à 4, **caractérisé en ce que** le corps en élastomère (2) présente une surface de corps détournée de l'élément de réglage (1) qui dispose de structures superficielles agrandissant la surface du corps qui sont conçues de manière et aptes à améliorer un échange thermique via les structures superficielles.

6. Actionneur selon une des revendications 1 à 5, **caractérisé en ce que** le corps en élastomère (2) possède au moins un canal de refroidissement dans lequel du fluide de refroidissement peut être canalisé.

7. Actionneur selon une des revendications 1 à 6, **caractérisé en ce que** le corps en élastomère (2) est isolant du point de vue électrique.

8. Actionneur selon une des revendications 1 à 7, **caractérisé en ce que** l'élément de réglage (1) est composé d'un matériau à mémoire de forme.

9. Actionneur selon une des revendications 1 à 8, **caractérisé en ce que** l'élément de réglage (1) est composé d'un fil fabriqué à partir d'un alliage à mémoire de forme, que le corps en élastomère (2) entoure le fil en correspondance géométrique à la manière d'une chemise et est tenu des deux côtés le long du fil entre deux moyens de fixation rattachés fixement au fil.

10. Actionneur selon une des revendications 1 à 8, **caractérisé en ce que** le corps en élastomère (2) est réalisé sous forme d'un corps moulé présentant une extension longitudinale et doté d'une face supérieure et d'une face inférieure qui sont mutuellement opposées dans l'extension longitudinale, qu'un élément de couverture (3) est respectivement assemblé fixement au niveau de la face supérieure et de la face inférieure du corps en élastomère (2), qu'au moins un fil fabriqué à partir d'un alliage à mémoire de forme traverse le corps en élastomère (2) et est assemblé respectivement fixement aux deux éléments de couverture (3).

11. Actionneur selon la revendication 10, **caractérisé en ce que** le corps moulé présente dans son extension longitudinale un axe de symétrie ou médian et que l'au moins un fil est posé excentriquement par rapport à l'axe de symétrie ou médian ou orienté obliquement par rapport à celui-ci.

12. Actionneur selon la revendication 10 ou 11, **caractérisé en ce que** l'élément de couverture assemblé fixement à la face inférieure (3) est réalisé sous forme d'un contre-palier mécanique stationnaire (6) qui prévoit un prolongement s'étendant dans l'extension longitudinale du corps en élastomère (2) et que l'élément de couverture (3) assemblé avec la face supérieure du corps en élastomère (2) entre en contact avec le prolongement (7) en cas de modification de forme et peut dévier le corps en élastomère (2) latéralement par rapport à l'extension longitudinale.
